# EUROPEAN PATENT SPECIFICATION

(11) **EP 0 757 523 B1**
(45) Date of publication and mention of the grant of the patent: **27.05.1998**
(21) Application number: 95916860.0
(22) Date of filing: 08.05.1995
(51) Int. Cl.: A23N 7/02

(54) **EQUIPMENT AND METHOD OF OPERATION FOR THE DRY PEELING OF POTATOES AND SIMILAR PRODUCE**
EINRICHTUNG UND BETRIEBSVERFAHREN ZUM TROCKENEN SCHÄLEN VON KARTOFFELN UND ÄHNLICHEN PRODUKTEN
APPAREIL ET PROCEDE D'EXPLOITATION SERVANT A EPLUCHER A SEC LES POMMES DE TERRE OU ANALOGUE

(30) Priority: 09.05.1994 NL 9400765
(43) Date of publication of application: 12.02.1997
(73) Proprietor: Aasman, Jan Rense, 8252 JW Dronten (NL)
(72) Inventor: Aasman, Jan Rense, 8252 JW Dronten (NL)
(86) International application number: PCT/NL95/00164
(87) International publication number: WO 95/30343

(56) References cited:
- EP-A- 0 088 000
- EP-A- 0 453 388
- DE-C- 446 651
- GB-A- 353 290
- US-A- 4 792 299

## Description

It is general knowledge to strip potatoes and similar produce of their outer layer in an industrial process. In this process many types of rolling, scraping, peeling and cutting machines and so forth utilized on a large scale that subject the potatoes and similar produce to a number of operations requiring large quantities of water. These operations continue until all outer layers and blemished parts have been removed from the potatoes or similar produce. The cuttings, ground together with the water, are removed as a slushy mixture. These operations result in a substantial loss of the potato body. This loss can amount to approximately 60% which results in a significant production cost increase in the peeled potato industry.

Thus the negative feature of the known processes is the large quantities of water utilized which is removed as a slushy effluent and is regarded as a pollutant requiring a costly cleaning process to separate the effluent components. The resulting sludge is considered a waste of little use.

In connection with the afore going it can be remarked that in DE-C-446 651 the skin is removed by a series of knives each directed at a different portion of the skin.

DE-C-446 651 discloses an apparatus for industrial dry peeling of potatoes, having a rotatable transporter to which evenly spaced holders are attached. The potatoes positioned on the holders move past a stationary group of cutting mechanisms in sequential stations, equipped with cutters which, during movement of the holders peel the portions of the potatoes which are protruding from the holders. A stationary operating station located after the first group of cutting mechanisms in the movement direction of the holders has means to remove the potatoes from the holders in order to expose the part of the potato not previously peeled. A second stationary group of cutting mechanisms complete the peeling by acting on the newly exposed portion of the potato.

US-A-4 792 299 discloses a cylindrical pastry cutter having a cutting edge at one end.

In EP-A-0 088 000 the skin is removed by abrasion with a rotating drum 17 whilst the end portions of the potato are removed by knives 13 furthermore in EP-A-0 453 388 the peeling of fruit is performed by a series of rotating knives 27 whilst in GB-A-353 290 a tuber is rotated between knives.

The objective of the invention is to design equipment and methods of operation which in contrast to known peeling processes, can be used without water and the cutting used for productive purposes such as a supplement to cattle fodder.

The method of operation for the industrial dry peeling of potatoes is hereafter set out in the claim 1.

Through this new method of operation the potato to be processed is machine punched to its largest circumference, giving the potato a preferably oval-cylindrical peeled surface through which the potato shows a reference level in a singular manner for all further operations. Preferably, a sleeve shaped punch-cutter is used.

The new method of operation offers the possibility in a relatively simple way to subject a singularly identified potato to a variety of manipulations to produce a peeled potato with a minimum of waste. Tests indicate that the waste produced by this "dry" process is approximately 30 to 35%. A further advantage is considered in the less labor intensive treatment of the products. In addition, elimination of the need for purification and separation installations as aforementioned results in relatively low investment costs.

According to a preferred embodiment of the invention, this method of operation uses a sleeve shaped punch cutter, this cutter functions as a temporary berth for the potato which need to be pushed out of its berth only partially for further peeling operations by cutting knives. It is thus important that the potato is clamped tight in the punch cutter yet remains movable.

According to the invention, with this method of operation the rounded zone obtained by the punching cutter is of a preferably oval-cylindrical shape; this shape is the closest match to the average shape of the potato. The invention is also applicable to other cross-section shapes such as for example an oblong shape with almost parallel zone parts.

The invention also provides for a structure to perform the previously described method of operation. This structure shows the specific details which are identified by the features of claim 6. This structure can be equipped with a stepwise rotating assembly plate with holders for punching cutters and whereby the various means of operation are in a stationary position. Naturally another stepwise movable transporter with holders for punching cutters can also be utilized, such as for example a chain transporter with which the holders with the cutters are moved along a partially linear path.

The invention further provides for the special operating ways of the various means positioned in the operating stations for the execution of further cutting and peeling operations. These are mentioned in the sub claims and are further explained in the description hereafter following.

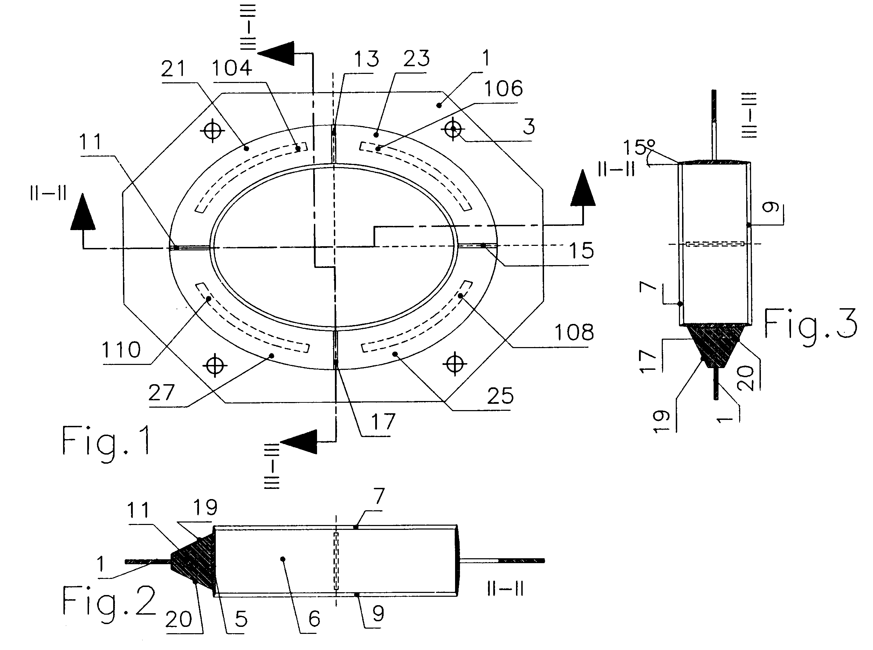

The invention will be described with greater specificity and clarity with reference to the drawings in which:
- Figure 1: there is shown a top view of the applied punch cutter,
- Figure 2: there is a cross-section according to the line II-II from Figure 1.
- Figure 3: there is a cross-section according to III-III from Figure 1.
- Figure 4: there is a schematic top view a of step wise rotating assembly plate for cutter holders according to Figure 1.
- Figure 5: there is a frontal view of a cutting unit with means of connection.
- Figure 6: there is a cross-section of a cutting unit without means of connection, according to the line VI-VI from Figure 5.
- Figure 7: there is a top view of the cutting unit without means of connection.
- Figure 8: there is shown a rotatable cutting knife.
- Figure 9: there is shown a top view of the knife according to Figure 8 without its driving means and
- Figure 10: there is shown in schematic manner all operations to be executed in sequential stages and
- Figure 11: there is shown an exploded view of the peeled potato, according to the invented method of operation and structure, that shows the punched away, respectively cut away parts grouped around this potato.
- Figure 12: there is a schematic top view of a stepwise movable chain transporter for the holders of punch cutters and
- Figure 13: there is shown a side view in a schematic manner of the chain transporter according to Figure 12.
One of the most important elements for use with the method of operation and the equipment structure for the dry peeling of potatoes is shown in figures 1,2 and 3, Here this element is shaped as a thin octagon plate (1) made of stainless steel provided with openings (3) for the attachment of the holder (1) to the assembly plate of a transporter. The holder (1) contains a sleeve shaped stainless punching cutter (5) which has an oblong, preferably oval, cross section shape and where the sleeve can wall (6) shows an oval-cylindrical shape. The top (7) and also the bottom side (9) of this punch cutter are constructed as a knife edge. The cutter (5) is attached to the holder (1) through welding the stainless steel tabs (11,13,15 and 17). The tab walls show cutting edges on their upper and lower sides (19 respectively 20).

Between the punch cutter (5), the holder (1) and the aforementioned tabs are four spaces in which plate shaped elements (21,23,25 and 27) can be moved. This will be discussed in more detail in another section.

According to a first embodiment of the invention, a transporter is used which is designed as a rotating, step wise rotatable assembly plate. This type of movement is known in the art and is thus not described in more detail. On this assembly plate (39) are a large number of cutter holders (1) of the described type, specifically 24 pieces fitted evenly. The movement structure of the cutter holders (1) is indicated by 41.

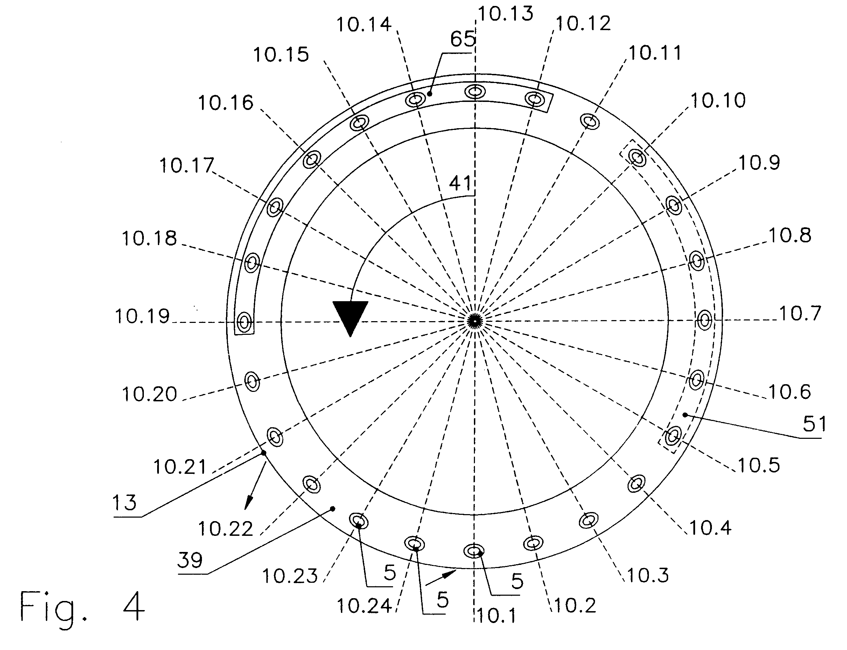

Near the periphery (43) of the assembly plate (39) are a large number of stationary processing stations positioned, each of which are structured to perform an appropriate procedure. These stations are indicated in figure 4 by 10.1, 10.2, 10.3, 10.4 and so forth.

The distinguishing features among others are
... the station 10.3., which means of punching and pressing are positioned,
... the station 10.5. in which means are positioned to remove the punched peeling in four parts,
... a first track (51),
... the station 10.6 to perform a rotating peeling operation,
... a first group stations 10.7, 10.8 and 10.9, of which each is provided with cutters,
... a second guide track (65),
... the station 10.12 to lift up the potatoes present in the holders (1) against the guide track (65),
... a station 10.13 for performing a rotating peeling action,
... a second group of stations 10.14, 10.15 and 10.16, of which each is provided with cutters,
... a station 10.19 for the removal of the punched and afterwards peeled potatoes.

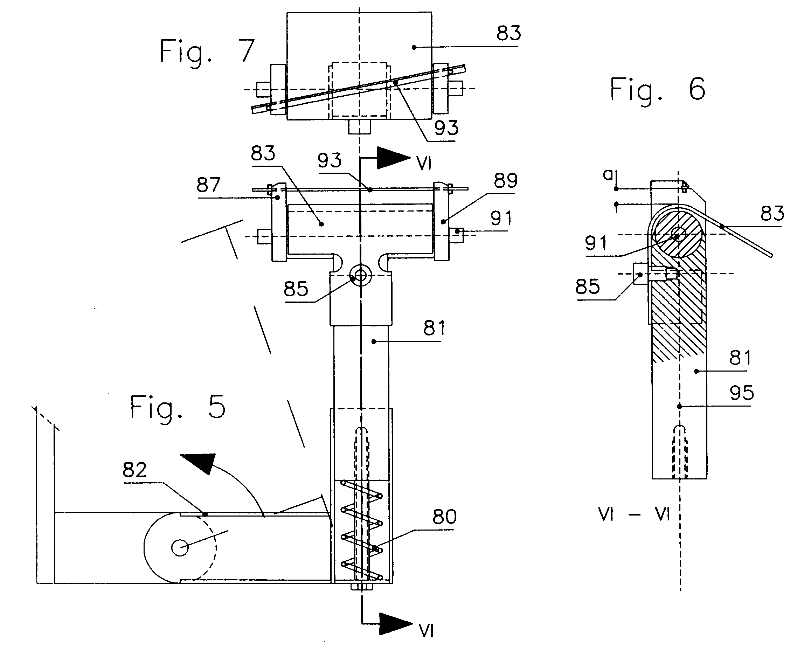

The in Figures 5, 6 and 7 displayed cutting structure, for use by stations 10.7, 10.8, 10.9 and 10.14, 10.15 and 10.16, contains a spring loaded (80) vertically movable shaft (81). This shaft contains a height adjustable sliding plate (83) which can be fastened with a screw (85). Further there is a jacket (91) bordered by flanges (87 and 89). Attached to these flanges is a cutting knife. This cutting knife takes a slanted angle with respect to the center line (95) of the shaft (81) and the direction of movement of the holders (1). The distance (a) is adjustable with a screw and determines the thickness of the peelings. The shaft (81) is mounted in a housing (82), which is designed in such a manner that the entire cutting structure is movable to process potatoes in every way and manner desired.

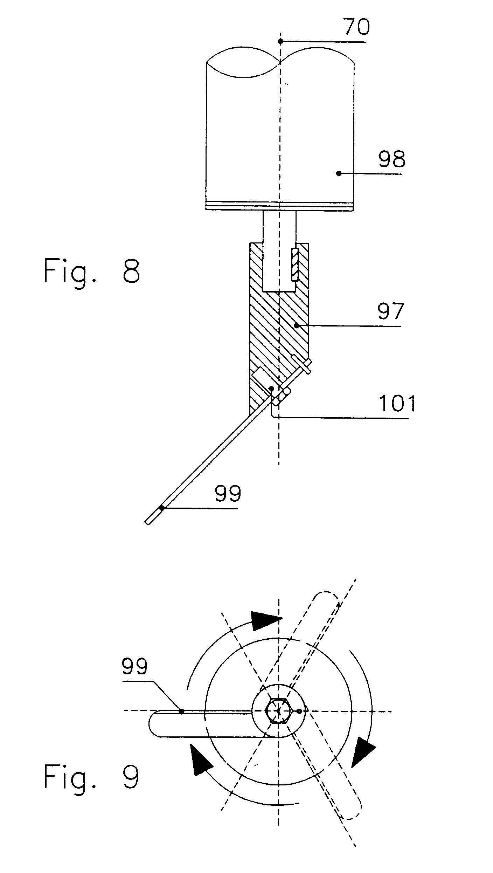

The cutting structures in Figures 8 and 9, which can be applied to the stations 10.6 and 10.13, contain a holder (97) which is rotatable by means of a schematically indicated power source (98). In the manner illustrated, a knifeblade (99) is attached to the holder. This knife can thus perform a cutting movement.

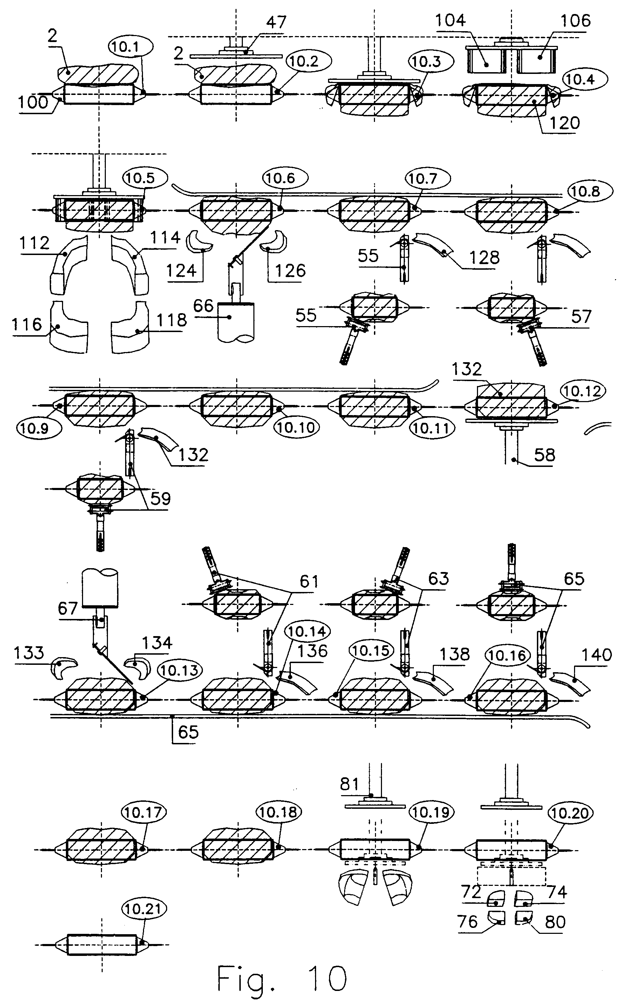

The operating method of schematically shown structure is now further explained on the basis of Figure 10. In this Figure, the potatoes to be processed can be distinguished in their sequential phases together with the schematically illustrated processing units in their operating position with potatoes. The various positions are indicated by 10.1, 10.2, 10.3 and so forth just as in Figure 4.
... In position 10.1 a potato (2) to be produced is with its largest length measurement aimed in the transport direction of the holders, placed in the sleeve shaped punch cutter.
... In position 10.2 the level of the punching tools are controlled.
... In position 10.3 the punching tool (47) is lowered by pressure mechanism not shown in detail. Thereby the potato is pushed outside the punching cutter over a portion of its height measurement in such a way that substantial portion of the potato remains clamped tight in the sleeve shaped knife and the punched out peeling drops outside this sleeve shaped cutter and lands on top of the openings in Figure 1 indicated by (21, 23, 25, 27).
... In position 10.4 the peelings, cut by means of cutting edges (19) of the tabs (11, 13, 15, 17), are removed in four sections (112, 114, 116, 118) through the openings (21, 23, 25 and 27) by peeling removal element, which shows a number of plate shaped attachments. The plate shaped attachments are indicated in Figure 1 by a dotted line (104, 106, 108 and 110).
... In position 10.6 the holder has landed under the first guide track, whereby the pre-punched potato is relocated, in height direction, in the sleeve shaped cutter and with a section (120) in all its positions, in which the guide track (51) functions, is shifted out of the punch cutter over a predetermined distance. In this position, the potato is processed over a conical surface on its lengths ends by the rotatable cutting structure according to Figures 8 and 9. The cut away sections are indicated with (124 and 126).
... In position 10.7, the potato, in its holder, lands before the cutting structure (55) according to Figures 5, 6 and 7. By moving the holders, the guide section (83) of that structure will follow the shape of the potato to be peeled and the cutting knife, with adjustable distance, will follow this slide section to perform a cutting operation.
... Nearby positions 10.8 and 10.9, similar as in 10.7 are performed every time over another section of the potato to be peeled. The cutting structures in those positions are indicated by (57 and 59). The cut away peelings are indicated by (130 and 132).
... The positions 10.10 and 10.11 are reserved cutting positions.
... In position 10.12, the potato, which now has been peeled also on the bottom side, is moved up in the sleeve shaped cutter by an upward pressing mechanism in such a way that the potato with its peeled rounded zone remains partially within the punching cutter and the outside top portion extends above the cutter.
... On passing the positions 10.13, 10.14, 10.15 and 10.16, the potato is held back the guide track (65), while it is being subjected to the cutting operations of the cutting units (67, 61, 63, 64) in a manner as previously described at the positions 10.6, 10.7, 10.8, 10.9. The peelings that are removed are indicated respectively by (134, 136, 138 and 140).
... The positions 10.17 and 10.18 are positions for reserve cutters.
... In position 10.19, the potato is pushed out of the sleeve shaped punching cutter by a suitable pressure mechanism (81). This mechanism can be equipped with additional knives to cut the potato in two parts (68 and 70).
... In position 10.20, a pressure mechanism is set up, similar to the pressure mechanism for position 10.19, which is equipped to divide a peeled potato into four parts (72, 47, 76 and 78).

In the aforementioned description, it is assumed that the sleeve shaped punch cutter shows a hollow cylindrical design up to its cutting edge. Because it is important that the potato, after the punch operation, is held tight yet in a movable configuration the cutting edge of the sleeve shaped cutter is designed with a sloped level preferably with an outward angle of 15%.

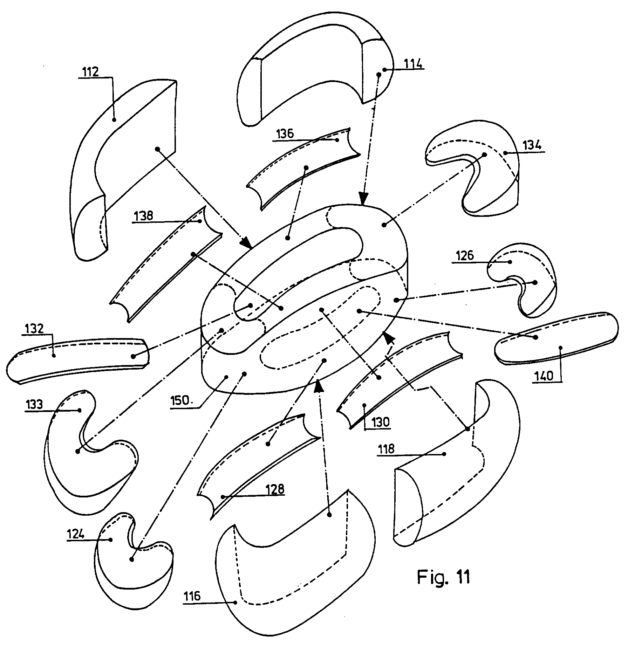

In Figure 11, a completely peeled potato is shown in its final phase in a perspective manner. The rounded, oval-cylindrical zone is indicated with 150. The cut away peeling parts are grouped here around the potato and have reference numbers which conform to those in Figure 10.

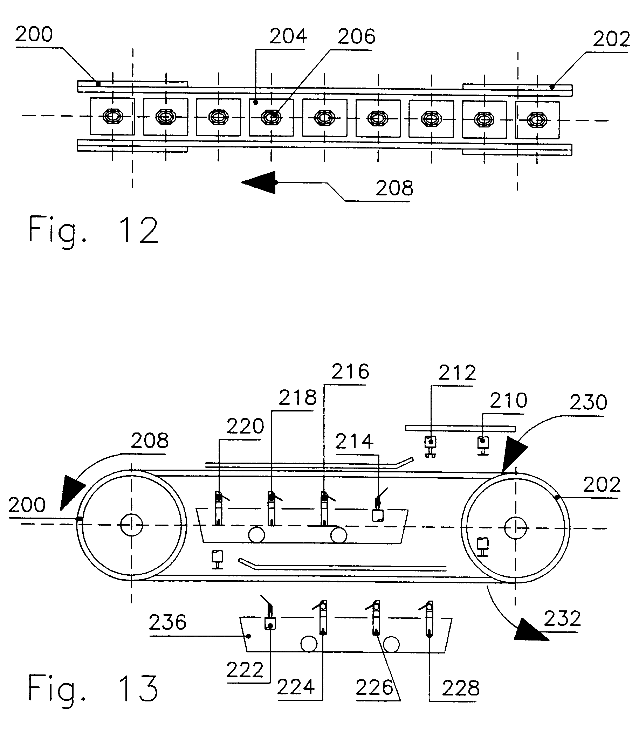

In the Figures 12 and 13 a chain transporter is shown as a step wise movable transporter. These Figures show schematic chain gear (200 and 202). Here the chain links carry assembly plates (204) which are comparable to the holders (1) of Figure 1. The sleeve shaped punch cutters and the movement of the transporter are indicated respectively (206) and (208). In a similar manner, as shown on the basis of the rotatable assembly plate according to Figure 1, the holders of the punch cutters pass identical fixed stations which are identified by reference (210, 212, 214, 216, 218, 220, 222, 224, 226 and 228) for the instruments placed at those points. The supply and removal of potatoes are indicated respectively by (230) and (232). In this design, the peeling waste lands in collection bins (234 and 236) from where they can be removed by suitable suction equipment.

## Claims

1. Method of industrial dry peeling of potatoes and similar products including the steps of removing the skin (112, 114, 116, 118) from the largest circumference of the potato by a punching operation thereby creating a cylindrical zone (150)and subsequently subjecting to further cutting operations the bordering unpeeled surfaces of the potato on both sides of the zone.

2. Method according to claim 1 characterised in that to shape the punched zone (150), a sleeve punching cutter (5) is used with a round configured punch edge (7, 9) upon which the potato to be punched (2) is placed and through the punching operation in its aforementioned zone (150) is stripped of its skin, subsequently the punched potato, remaining in this punch cutter, preferably held tight yet movable, is partially moved from the punching cutter and is subjected to further cutting operations.

3. Method of operation according to claim 1 or 2 characterised in that the cutting operations on both sides of the zone (150) is performed in the direction of preferably the main axis of the potato.

4. Method of operation according to claim 2 or 3 characterised in that the potato part protruding out of the punch cutter after the punching operation, is subjected to the peeling operation of rotating knives (99) in such a way that on both sides of preferably the punched zone (150) simultaneously on each of the ends of the longest axis of the aforementioned zone, peelings (124, 126, 132, 134) is removed by a conical shaped cutting face.

5. A potato which has a ring shaped preferably oval, cylindrical zone and having a number of peeled, curved lines on both sides of this zone.

6. A structure for the performance of the method of operation according to one of the previous claims, provided with
.. a stepwise movable transporter to which evenly spaced holders (1) are attached, with each holder (1) containing a sleeve cutter which has an upper, round cutting edge that encloses a first preferably oval shaped opening in which the potato to be processed can be deposited with its longest axis in the transport direction;
... a stationary constructed operating station (10.3) with means to punch a potato (2), deposited on the rounded cutting edge, into the sleeve shaped cutter (5) whereby the potato over a portion of its punched rounded zone (150) can be pushed out of the second opening at the opposite end of the cutter;
... a first stationary guide track (51) constructed in the direction of movement of the holders which over a first portion of the track travelled by the holders contacts the potato parts, protruding out of the punch cutter, during the track transportation;
... a stationary (10.7, 10.8, 10.9) constructed first group of cutting mechanisms each in a sequential station and equipped with cutters (55, 57, 59) which are each biased towards the punch cutter by a spring (80) and which, during movement of the holders (1) along the first guide track, (51), against spring action can peel the potato portions protruding out of the sleeve shaped punch cutter (5) one after another while the potatoes are prevented by the first guide track (51) from sliding out of the punch cutter;
...a stationary operating station (10.12) located in the movement direction of the holders (1), after the first group of cutting mechanisms, in which means (58) are placed to push out the potato deposited in the sleeve shaped punch cutter (5) in order to expose the other part not yet subjected to a peeling action at the opposite side of the round zone;
... a stationary guide track (65) constructed in the movement direction of the holders (1), which over a second portion of the path to be travelled by the holders, contacts the potato partially pushed out of the first opening of the punch cutter (5);
... a stationary constructed second group of cutting mechanisms (10.14, 10.15, 10.16), each in a sequential station and each provided with cutters which are each biased towards the punch cutter by a spring and with which during the movement of the holders along the second guide track against spring action the potato parts pushed out of the second opening of the sleeve shaped punch cutter can be peeled one after the other while the potatoes are prevented by the second guide track from moving out of the sleeve cutters and
... stationary constructed means (81) which push the processed potato out of the punch cutter for subsequently removal.

7. A structure according to claim 6 characterised in that the step wise movable transporter is a rotatable assembly plate (39) upon which the holders (1), each with a punch cutter (5), are placed.

8. A structure according to claim 6 characterised in that the step wise movable transporter is a chain transporter which has chain links that contain assembly plates (204) with each plate containing a can shaped cutter (206).

9. A structure according to claims 6, 7 or 8 characterised in that it, by means of stationary placed units (104, 106, 108, 110) removes the punched out peelings (112, 114, 116, 118) from the sleeve shaped cutter, via openings (21, 23, 25, 27) in each holder (1) outside the sleeve shaped section of the punch cutter.

10. A structure according to one of the claims 6, 7, 8 or 9 characterised in that the first and second group of cutting mechanisms (55, 57, 59 respectively 61, 63, 65) contains a shaft (81) that is adjustable over its length axis which is vertically movable against a spring action (80), this shaft (81) having a jacket (87, 89, 91) with a blade (93) and on this shaft (81) a lengthwise movable curved guide plate can be installed which, with one of its planes, running parallel at a distance of the blade (93) during the transport movement of the holders (1), forms a guide plate for the blade following the curves of the to be peeled potato parts protruding out of the punch cutter.

11. A structure according to claim 10 characterised in that the blade (93) is positioned in a slanted angle in relationship to the direction of movement of the holders (1).

12. A structure according to one of the claims 6, 7, 8, 9, 10 or 11 characterised in that, taking into consideration the direction of movement of the transporter, each time before a group of cutting mechanisms (55, 57, 59 respectively 61, 63, 65) there are additional cutting structures (66, 67) each of which contain a on a vertical axis (70) rotatable cutter (99) that runs on a 90 degree angle in relationship to the axis.

13. A punch cutter for use with the method of operation according to claims 1, 2, 3 or 4 and/or the structure according to the aforementioned claims 6, 7, 8 or 9, the sleeve shaped punch cutter (5) being shaped cylindricaly and its cutting edge (7, 9), which is provided on both openings of the cutter, being chamfered at an angle from 8 to 15 degrees towards the inside diameter, so as to enable the cut potato to remain firmly and slidably in the cutter knife for further peeling steps on the cut potato.

14. A punch cutter according to claim 13 characterised in that the cutting edge (7, 9) has a serrated configuration.

## Patentansprüche

1. Methode zur industriellen Trockenschälung von Kartoffeln und ähnlichen Produkten mit dem Merkmal, daß Arbeitsschritte zur Entfernung der Schale von einem Großteil des Kartoffelumfangs mittels einer Stanzbearbeitung (112, 114, 116, 118) unter gleichzeitiger Schaffung einer zylindrischen Zone (150) durchgeführt werden, woraufhin die Kartoffel an den angrenzenden, noch ungeschälten Flächen zu beiden Seiten dieser Zone weiteren Schälvorgängen unterworfen wird.

2. Methode wie beschrieben in Feststellung 1 mit dem Merkmal, daß zur Schaffung der Stanzzone (150) ein hülsenförmiges Stanzmesser (5) mit gerundetem Stanzrand (7,9) verwendet wird. Die zu stanzende Kartoffel (2) wird auf das Messer gelegt und durch den Stanzvorgang wird in der bereits erwähnte Zone der Kartoffel (150) die Schale entfernt. Anschließend wird die so gestanzte Kartoffel, die in möglichst stabilem, aber beweglichem Zustand in der Messerhülse verbleibt, teilweise entfernt und weiteren Schälvorgängen unterworfen.

3. Vorgänge wie beschrieben in den Feststellungen 1 und 2 mit dem Merkmal, daß die Schälvorgänge zu beiden Seiten der Zone (150) vorzugsweise in Übereinstimmung mit dem Verlauf der Hauptachse der Kartoffel durchgeführt werden.

4. Vorgänge wie beschrieben in den Feststellungen 2 und 3 mit dem Merkmal, daß der aus dem Stanzmesser herausragende Kartoffelteil nach dem Stanzvorgang mit Hilfe von rotierenden Messern (99) weiter geschält wird, und zwar auf solche Weise, daß vorzugsweise zu beiden Seiten der Stanzzone (150) die Schalenteile 124,126,132,134) an beiden Enden der Längsachse der erwähnten Zone in konisch verlaufenden Schneidevorgängen entfernt werden.

5. Kartoffel mit einer ringförmigen, vorzugsweise ovalen zylindrischen Zone, die an beiden Seiten dieser Zone einige gekrümmt verlaufende Schälflächen aufweist.

6. Aufbau zur Durchführung des Vorgangs gemäß einer der obigen Feststellungen, ausgerüstet mit
... einer schrittweise beweglichen Transportvorrichtung, auf die in regelmäßigen Abständen Halter (1) montiert sind, wobei auf jeden Halter (1) ein hülsenförmiges Stanzmesser (6) gesetzt wird. Die Hülse (5) muß über einen gerundeten oberen Stanzrand (7) verfügen, der eine Öffnung umschließt, auf welche die zu verarbeitende Kartoffel gelegt wird (Längsachse in Transportrichtung);
... einer festinstallierten Verarbeitungsstation (10.3) mit der eine Kartoffel (2), die sich auf dem gerundeten Stanzrand befindet, in einem hülsenförmiges Stanzmesser (5) gestanzt werden kann, wobei die Kartoffel über einen Teil ihrer runden Stanzzone (150) durch die zweite Öffnung am anderen Ende des hülsenförmigen Stanzmessers (5) hinausbewegt werden kann;
... einer ersten, festinstallierten Führungsbahn (51) in Bewegungsrichtung der Halter, die während des ersten Teils der von den Haltern während des Bahntransportes zurückzulegenden Strecke die teilweise aus der ersten Öffnung des Stanzmessers hervorragende Kartoffel berührt;
... einer ersten, festinstallierten Schälwerkzeuggruppe (10.7, 10.8, 10.9), jeweils nacheinander folgend und ausgestattet mit Schneidemessern (55, 57, 59), die jeweils von einer Feder (80) gehalten werden und sich gegenüber dem Stanzmesser befinden. Während sich die Halter (1) entlang der ersten Führungsbahn (51) bewegen, wird die Feder in Gang gesetzt und die Kartoffelteile, die aus der zweiten Öffnung des hülsenförmigen Stanzmessers herausragen werden, können nacheinander geschält werden, während die erste Führungsbahn (51) verhindert, daß die Kartoffeln aus dem hülsenförmigen Stanzmesser (5) herausrutschen;
... einer festinstallierten Verarbeitungsstation (10.12) in Bewegungsrichtung der Halter (1), die sich hinter der ersten Schneidewerkzeuggruppe befindet. Hier befinden sich entsprechende Mittel (58), mit denen die Kartoffel in das hülsenförmige Stanzmesser (5) gelegt wird, wo die andere, noch ungeschälte Seite gegenüber der runden Zone geschält werden kann;
... einer festinstallierten Führungsbahn (65) in Bewegungsrichtung der Halter (1), die während des zweiten Teils der von den Haltern zurückzulegenden Strecke die teilweise aus der ersten Öffnung des Stanzmessers (5) hinausbewegten Kartoffel berührt;
... einer zweiten, festinstallierten Schneidewerkzeuggruppe (10.14., 10.15, 10.16), jeweils nacheinander folgend und ausgestattet mit Schneidemessern, die jeweils von einer Feder gehalten werden und sich gegenüber dem Stanzmesser befinden. Während sich die Halter entlang der zweiten Führungsbahn bewegen, wird die Feder in Gang gesetzt und die Kartoffelteile, die aus der zweiten Öffnung des hülsenförmigen Stanzmessers herausragen werden, können nacheinander geschält werden, während die erste Führungsbahn verhindert, daß die Kartoffeln aus dem hülsenförmigen Stanzmesser herausrutschen; Schließlich besteht der Aufbau aus einer
... festinstallierten Vorrichtungen (81), die eine geschälte Kartoffel aus dem Stanzmesser hinausbewegen, woraufhin sie entfernt wird.

7. Aufbau gemäß Feststellung 6 mit dem Merkmal, daß es sich bei der schrittweise beweglichen Transportvorrichtung um eine drehbare Platte (39) handelt, auf welche die jeweils mit Stanzmesser (5) ausgestatteten Halter (1) gesetzt werden.

8. Aufbau gemäß Feststellung 6 mit dem Merkmal, daß es sich bei der schrittweise beweglichen Transportvorrichtung um einen Kettentransporter handelt, dessen Kettenglieder mit Platten (204) ausgestattet sind, auf die jeweils ein hülsenförmiges Stanzmesser (206) montiert ist.

9. Aufbau gemäß der Feststellungen 6,7 bzw. 8 mit dem Merkmal, daß die herausgestanzten Schalen (112, 114, 116, 118) über die in jedem Halter (1) vorhandenen Öffnungen (21, 23, 25, 27) aus dem hülsenförmigen Teil des Stanzmessers entfernt werden.

10. Aufbau gemäß einer der Feststellungen 6, 7, 8 bzw. 9 mit dem Merkmal, daß die erste und zweite Schneidewerkzeuggruppe (55, 57, 59 bzw. 61, 63, 65) einen Schaft (81) enthält, der in Längsrichtung verschiebbar ist, dabei jedoch von einer Feder (80) gehalten wird. Dieser Schaft (81) verfügt über ein Schneidemesser (93) in einer Halterung (87, 89, 91). Auf den Schaft (81) kann zudem eine in Längsrichtung bewegliche, gekrümmte Führungsplatte montiert werden, bei der eine Fläche sich während der Transportbewegung der Halter (1) in gewisser Entfernung parallel zum Schneidemesser (93) bewegt, und somit zur Führungsplatte für das Schneidemesser wird, die sich dem Kurvenverlauf der zu schälenden, aus dem Stanzmesser herausragenden Kartoffelteile anpaßt.

11. Aufbau gemäß Feststellung 10 mit dem Merkmal, daß das Schneidemesser (93) schräg zur Bewegung der Halter (1) positioniert wird.

12. Aufbau gemäß einer der Feststellungen 6, 7, 8, 9, 10 bzw. 11 mit dem Merkmal, daß sich - unter Berücksichtigng der Bewegungsrichtung der Transportvorrichtung - vor jeder Schneidewerkzeuggruppe (55, 57, 59 bzw. 61. 63, 65) jeweils eine zusätzliche Schneidevorrichtung (66, 67) befindet, die im rechten Winkel zur Achse steht.

13. Geeignetes Stanzmesser für den Betrieb gemäß der Feststellungen 1, 2, 3 bzw. 4 und/oder des Aufbaus gemäß der obigen Feststellungen 6, 7, 8 bzw. 9. Das hülsenförmige Stanzmesser (5) ist zylinderförmig und verfügt über Stanzränder (7, 9) an beiden Öffnungen, die in einem 8-15°-Winkel zum Innendurchmesser hin abgeschrägt sind, damit die zu behandelnde Kartoffel zwar stabil, aber beweglich im Stanzmesser verbleibt und weiteren Schälvorgängen unterworfen werden kann.

14. Stanzmesser gemäß Schlußfloegrung 13 mit dem Merkmal, daß der Stanzrand (7, 9) gezahnt ist.

## Revendications

1. Méthode d'épluchage à sec des pommes de terre et produits analogues consistant à enlever d'abord la peau (112, 114, 116, 118) de la plus large circonférence de la pomme de terre au moyen d'une perforation créant une zone cylindrique (150), puis à soumettre à des opérations de découpage les surfaces adjacentes non épluchées des deux côtés de cette zone.

2. Méthode correspondant à la conclusion 1 et caractérisée par le fait que, pour former la zone perforée (150), la perforatrice utilisée se présente sous la forme d'une bague (5) possédant un bord rond (7, 9) sur lequel la pomme de terre à perforer (2) est placée et dépouillée de sa peau dans la zone susmentionnée (150) par l'opération de perforation, après quoi la pomme de terre perforée, tout en restant dans cette perforatrice où elle est de préférence fermement maintenue sans être bloquée, est partiellement extraite de la perforatrice pour être soumise à d'autres opérations de coupe.

3. Méthode correspondant aux conclusions 1 et 2 et caractérisée par le fait que les opérations de découpe des deux côtés de la zone (150) sont effectuées de préférence dans la direction de l'axe principal de la pomme de terre.

4. Méthode correspondant aux conclusions 2 ou 3 et caractérisée par le fait que la partie de la pomme de terre dépassant de la perforatrice après perforation est soumise à l'action de couteaux rotatifs (99) de manière que, de chaque côté d'une zone correspondant de préférence à la zone perforée (150), de façon simultanée à chaque extrémité du grand axe de la zone précédemment mentionnée, les épluchures (124, 126, 132, 134) soient enlevées par une surface de coupe conique.

5. Pomme de terre présentant une zone cylindrique en forme d'anneau, de préférence ovale, et plusieurs lignes d'épluchage incurvées des deux côtés de cette zone.

6. Structure permettant la mise en oeuvre de la méthode correspondant à une des conclusions précédentes, équipée
... d'un transporteur se déplaçant par étapes auquel sont fixés des supports équidistants (1) contenant chacun une bague perforatrice possédant un bord supérieur tranchant rond qui délimite une première ouverture, de préférence ovale,
où la pomme de terre à traiter peut être déposée avec son grand axe dans la direction du transport ;
... d'un poste de traitement fixe (10.3) pourvu d'éléments permettant de perforer une pomme de terre (2) déposée sur le tranchant arrondi en la poussant dans la perforatrice en forme de bague (5) étant entendu que la pomme de terre peut être poussée hors de la seconde ouverture à l'extrémité opposée de la lame sur une certaine portion de sa zone perforée arrondie (150) ;
... d'une première glissière de guidage fixe (51) construite dans la direction du mouvement des supports qui, sur une première portion de la glissière parcourue par les supports, est en contact avec les parties de la pomme de terre dépassant de la perforatrice, pendant le transport sur la glissière ;
... d'un premier groupe fixe (10.7, 10.8, 10.9) de mécanismes de coupe disposés chacun dans un poste séquentiel (sequential station) et pourvus de lames (55, 57, 59) qui sont chacune maintenues contre la perforatrice par un ressort (80) et qui, pendant le mouvement des supports (1) le long de la première glissière (51), contre la pression du ressort, peuvent éplucher les portions de pomme de terre dépassant de la bague perforatrice (5) l'une après l'autre tandis que la première glissière (51) empêche les pommes de terre de glisser hors de la perforatrice ;
... d'un poste de traitement fixe (10.12) situé dans les directions du mouvement des supports (1), après le premier groupe de mécanismes de coupe, dans lequel sont disposés des éléments (58) permettant de pousser la pomme de terre déposée dans la perforatrice en forme de bague (5) de façon à exposer la partie non encore soumise à épluchage à l'extrémité opposée de la zone ronde ;
... d'une glissière fixe (65) disposée dans la direction du mouvement des supports (1), laquelle entre en contact avec la pomme de terre dépassant partiellement de la première ouverture de la perforatrice (5) sur une seconde portion du trajet parcouru par les supports ;
... d'un second groupe fixe de mécanismes de coupe (10.14, 10.15, 10.16), disposés chacun dans un poste séquentiel et pourvus chacun de lames qui sont chacune situées contre la perforatrice par un ressort et qui, pendant le mouvement des supports le long de la seconde glissière, contre la pression du ressort, les parties de pomme de terre poussées hors de la seconde ouverture de la perforatrice en forme
de bague peuvent être épluchées l'une après l'autre tandis que la seconde glissière empêche les pommes de terres de sortir des bagues perforatrices et
... d'éléments fixes (81) poussant la pomme de terre traitée hors de la perforatrice afin ensuite de l'en dégager.

7. Structure correspondant à la conclusion 6 et caractérisée par le fait que le transporteur se déplaçant par étapes est une plaque d'assemblage orientable (39) sur laquelle sont disposés les supports (1), lesquels sont chacun pourvus d'une perforatrice (5).

8. Structure correspondant à la conclusion 6 et caractérisée par le fait que le transporteur se déplaçant par étapes est un transporteur à chaîne possédant des maillons qui contiennent des plaques d'assemblage (204), lesquelles contiennent chacune un outil de coupe en forme de bague (206).

9. Structure correspondant aux conclusions 6, 7 ou 8 et caractérisée par le fait qu'elle débarrasse la perforatrice en forme de bague, au moyen d'éléments fixes (104, 106, 108, 110), des épluchures résultant de la perforation (112, 114, 116, 118) en les rejetant à l'extérieur de la section en forme de bague de chaque perforatrice au travers d'ouvertures (21, 23, 25, 27) existant dans chaque support (1).

10. Structure correspondant à l'une des conclusions 6, 7, 8 ou 9 et caractérisée par le fait que le premier et le second groupe de mécanismes de coupe (55,57, 59 respectivement 61, 63, 65) contient un axe (81) ajustable sur son axe longitudinal qui peut se déplacer verticalement contre la pression d'un ressort (80). Cet axe (81) possède une gaine (87, 89, 91) pourvue d'une lame (93). Il est possible d'installer sur cet axe (81) une plaque de guidage incurvée déplaçable longitudinalement laquelle, avec une de ses faces, se déplaçant parallèlement à une certaine distance de la lame (93) pendant le mouvement assurant le transport des supports (1), forme une plaque de guidage pour la lame en suivant les tracés des parties de pomme de terre à éplucher qui dépassent de la perforatrice.

11. Structure correspondant à la conclusion 10 et caractérisée par le fait que la lame (93) est placée en biais par rapport à la direction du mouvement des supports (1).

12. Structure correspondant à l'une des conclusions 6, 7, 8, 9, 10 ou 11 et caractérisée par le fait que, compte tenu de la direction du mouvement du transporteur, il y a, devant chaque groupe de mécanismes de coupe (55, 57, 59 respectivement 61, 63, 65), des structures de coupe additionnelle (66, 67) qui se déplacent toutes à 90° par rapport à l'axe.

13. Perforatrice à utiliser selon la méthode correspondant aux conclusions 1, 2, 3 ou 4 et/ou structure correspondant aux conclusions 6, 7, 8 ou 9 susmentionnées. La perforatrice en forme de bague (5) a une forme cylindrique et son bord tranchant (7,9), présent aux deux ouvertures de la perforatrice, possède un chanfrein formant un angle de 8 à 15 degrés par rapport au diamètre interne de façon à permettre à la pomme de terre coupée d'être maintenue fermement tout en pouvant glisser dans le couteau pour les prochaines étapes de l'épluchage.

14. Perforatrice correspondant à la conclusion 13 et caractérisée par le fait que le tranchant (7, 9) a une configuration dentelée.
